# EUROPEAN PATENT APPLICATION

(11) **EP 4 845 215 A1**
(43) Date of publication of application: **25.11.2026**
(21) Application number: 25224366.2
(22) Date of filing: 17.12.2025
(51) Int. Cl.: H04W 28/20

(54) **OPERATION MODE INDICATION WITH DYNAMIC SUBBAND OPERATION AND DYNAMIC BANDWIDTH EXTENSION**

(30) Priority: 23.05.2025 US 202563811005 P
(71) Applicant: INTEL Corporation, Santa Clara, CA 95054 (US)
(72) Inventor: CARIOU, Laurent, 29290 Milizac (FR)
(74) Representative: Viering, Jentschura & Partner mbB Patent- und Rechtsanwälte

(57) **Abstract**

This disclosure describes systems, methods, and devices related to optimized dynamic operation. A device may receive a signal indicative of current network conditions. The device may analyze the received signal to determine available bandwidth. The device may allocate bandwidth to a plurality of wireless communication channels based on the determined available bandwidth.

## Description

### Background

Wireless devices are becoming more prevalent, necessitating efficient access to wireless channels. Standards are evolving to enhance connectivity, integrating advanced technologies in modem networks.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:
FIG. 1 shows is a network diagram illustrating an example network environment for optimized dynamic operation, in accordance with one or more example embodiments of the present disclosure;
FIG. 2 depicts an illustrative schematic diagram for optimized dynamic operation, in accordance with one or more example embodiments of the present disclosure.;
FIG. 3 shows a flow diagram of a process for an illustrative optimized dynamic operation system, in accordance with one or more example embodiments of the present disclosure;
FIG. 4 shows a functional diagram of an exemplary communication station that may be suitable for use as a user device, in accordance with one or more example embodiments of the present disclosure
FIG. 5 shows a block diagram of an example machine upon which any of one or more techniques (e.g., methods) may be performed, in accordance with one or more example embodiments of the present disclosure;
FIG. 6 shows a block diagram of a radio architecture in accordance with some examples;
FIG. 7 shows an example front-end module circuitry for use in the radio architecture of FIG. 6, in accordance with one or more example embodiments of the present disclosure;
FIG. 8 shows an example radio IC circuitry for use in the radio architecture of FIG. 6, in accordance with one or more example embodiments of the present disclosure; and
FIG. 9 shows an example baseband processing circuitry for use in the radio architecture of FIG. 6, in accordance with one or more example embodiments of the present disclosure.

### Description

The following description and the drawings sufficiently illustrate specific embodiments to enable those skilled in the art to practice them. Other embodiments may incorporate structural, logical, electrical, process, algorithm, and other changes. Portions and features of some embodiments may be included in, or substituted for, those of other embodiments. Embodiments set forth in the claims encompass all available equivalents of those claims.

Wi-Fi 8 (IEEE 802.11bn or ultra high reliability (UHR)) is the next generation of Wi-Fi and a successor to the IEEE 802.11be (Wi-Fi 7) standard. In line with all previous Wi-Fi standards, Wi-Fi 8 will aim to improve wireless performance in general along with introducing new and innovative features to further advance Wi-Fi technology.

Dynamic Subband Operation (DSO) is being defined in IEEE 802.11bn (11bn), which allows the following:
- a basic service set (BSS) bandwidth (BW) is 320MHz for instance;
- and a non-AP STA BW is lower than the BSS BW (160MHz for instance);
- with DSO the AP can initiate a transmit opportunity (TXOP) with a large BW (320MHz) and send an initial control frame (ICF) (buffer status report poll (BSRP) trigger frame (TF)) to the STA to indicate that it is scheduled outside of its operating BW (in the secondary 160MHz).

Example embodiments of the present disclosure relate to systems, methods, and devices for WiFi8 -operation mode indication (OMI) with dynamic subband operation (DSO) and dynamic bandwidth extension (DBE).

In this disclosure, solutions are proposed to ensure the above features coexist properly together.

In one or more embodiments, a device or a system may comprise one or more components, which may include one or more of: apparatus, station (STA), access point (AP), and/or other network elements. At its most basic configuration, the device or system includes one or more processors, memory, and instructions. The processor(s) may be implemented using general-purpose microprocessors, digital signal processors (DSPs), field-programmable gate arrays (FPGAs), or other suitable computational entities capable of performing calculations or manipulations of information. The memory may include RAM, ROM, flash memory, or other storage media suitable for storing instructions and data necessary for system operation. These components, individually or in combination, enable the execution of processes that facilitate communication and functionality within the system.

The above descriptions are for purposes of illustration and are not meant to be limiting. Numerous other examples, configurations, processes, algorithms, etc., may exist, some of which are described in greater detail below. Example embodiments will now be described with reference to the accompanying figures.

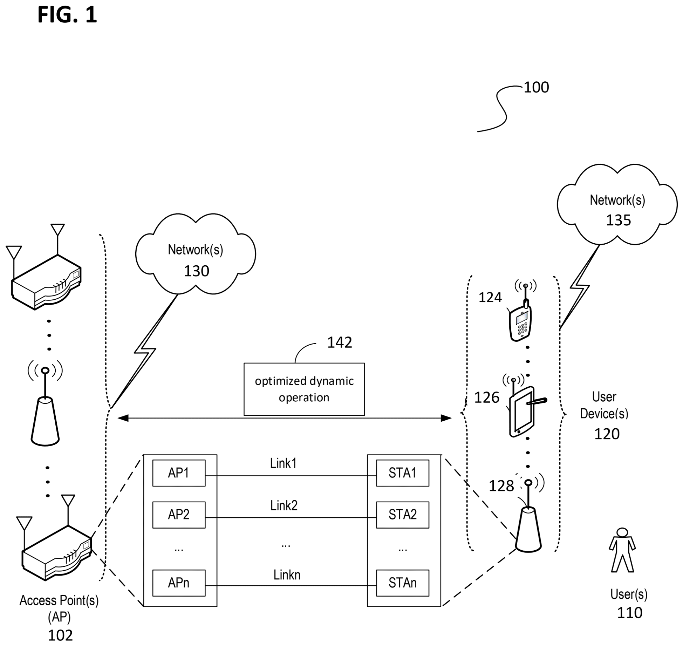

FIG. 1 is a network diagram illustrating an example network environment of optimized dynamic operation, according to some example embodiments of the present disclosure. Wireless network 100 may include one or more user devices 120 and one or more access points(s) (AP) 102, which may communicate in accordance with IEEE 802.11 communication standards. The user device(s) 120 may be mobile devices that are non-stationary (e.g., not having fixed locations) or may be stationary devices.

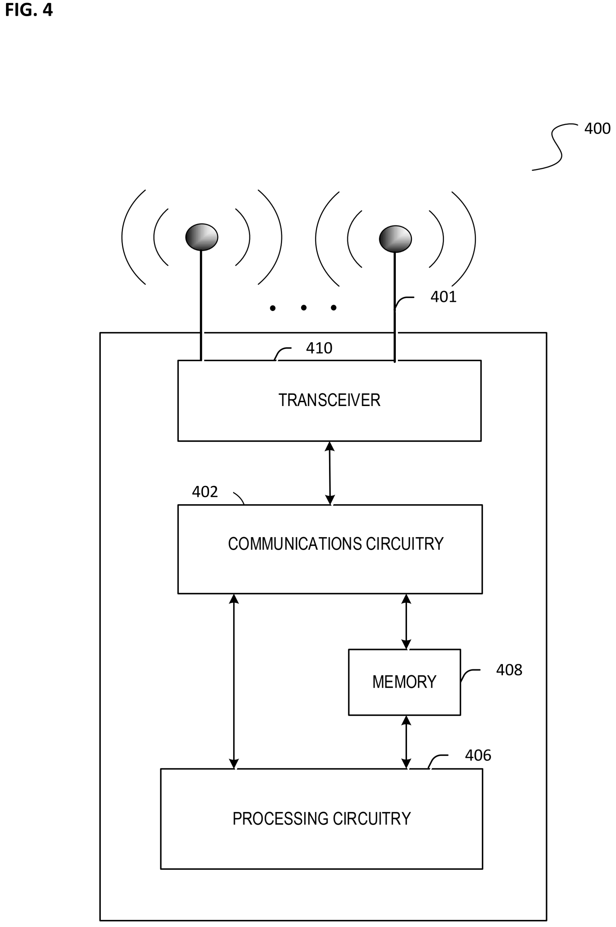

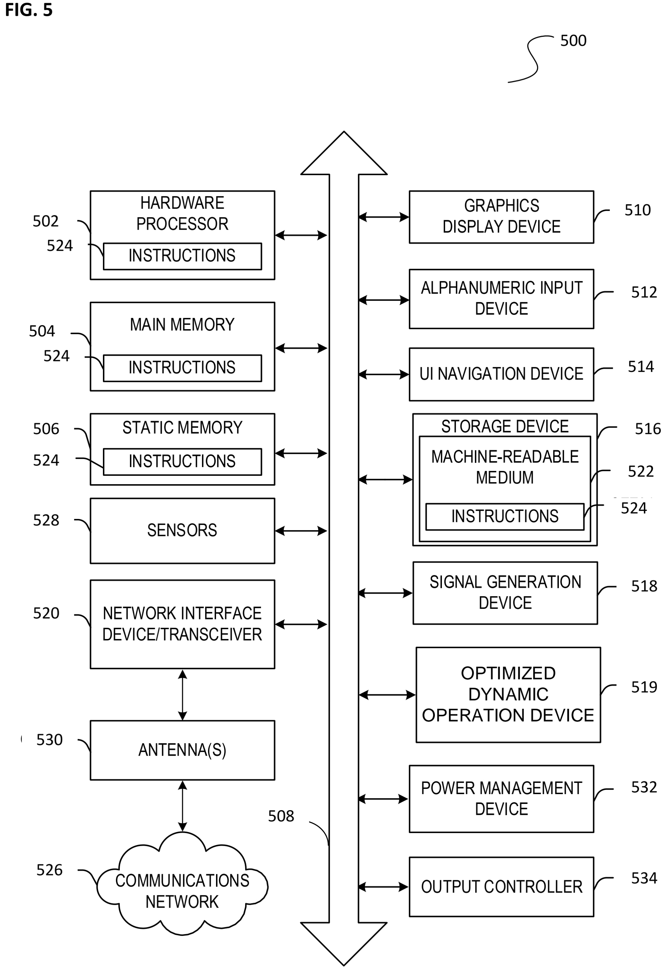

In some embodiments, the user devices 120 and the AP 102 may include one or more computer systems similar to that of the functional diagram of FIG. 4 and/or the example machine/system of FIG. 5.

One or more illustrative user device(s) 120 and/or AP(s) 102 may be operable by one or more user(s) 110. It should be noted that any addressable unit may be a station (STA). An STA may take on multiple distinct characteristics, each of which shape its function. For example, a single addressable unit might simultaneously be a portable STA, a quality-of-service (QoS) STA, a dependent STA, and a hidden STA. The one or more illustrative user device(s) 120 and the AP(s) 102 may be STAs. The one or more illustrative user device(s) 120 and/or AP(s) 102 may operate as a personal basic service set (PBSS) control point/access point (PCP/AP). The user device(s) 120 (e.g., 124, 126, or 128) and/or AP(s) 102 may include any suitable processor-driven device including, but not limited to, a mobile device or a non-mobile, e.g., a static device. For example, user device(s) 120 and/or AP(s) 102 may include, a user equipment (UE), a station (STA), an access point (AP), a software enabled AP (SoftAP), a personal computer (PC), a wearable wireless device (e.g., bracelet, watch, glasses, ring, etc.), a desktop computer, a mobile computer, a laptop computer, an ultrabook^{™} computer, a notebook computer, a tablet computer, a server computer, a handheld computer, a handheld device, an internet of things (IoT) device, a sensor device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "carry small live large" (CSLL) device, an ultra mobile device (UMD), an ultra mobile PC (UMPC), a mobile internet device (MID), an "origami" device or computing device, a device that supports dynamically composable computing (DCC), a context-aware device, a video device, an audio device, an A/V device, a set-top-box (STB), a blu-ray disc (BD) player, a BD recorder, a digital video disc (DVD) player, a high definition (HD) DVD player, a DVD recorder, a HD DVD recorder, a personal video recorder (PVR), a broadcast HD receiver, a video source, an audio source, a video sink, an audio sink, a stereo tuner, a broadcast radio receiver, a flat panel display, a personal media player (PMP), a digital video camera (DVC), a digital audio player, a speaker, an audio receiver, an audio amplifier, a gaming device, a data source, a data sink, a digital still camera (DSC), a media player, a smartphone, a television, a music player, or the like. Other devices, including smart devices such as lamps, climate control, car components, household components, appliances, etc. may also be included in this list.

As used herein, the term "Internet of Things (IoT) device" is used to refer to any object (e.g., an appliance, a sensor, etc.) that has an addressable interface (e.g., an Internet protocol (IP) address, a Bluetooth identifier (ID), a near-field communication (NFC) ID, etc.) and can transmit information to one or more other devices over a wired or wireless connection. An IoT device may have a passive communication interface, such as a quick response (QR) code, a radio-frequency identification (RFID) tag, an NFC tag, or the like, or an active communication interface, such as a modem, a transceiver, a transmitter-receiver, or the like. An IoT device can have a particular set of attributes (e.g., a device state or status, such as whether the IoT device is on or off, open or closed, idle or active, available for task execution or busy, and so on, a cooling or heating function, an environmental monitoring or recording function, a light-emitting function, a sound-emitting function, etc.) that can be embedded in and/or controlled/monitored by a central processing unit (CPU), microprocessor, ASIC, or the like, and configured for connection to an IoT network such as a local ad-hoc network or the Internet. For example, IoT devices may include, but are not limited to, refrigerators, toasters, ovens, microwaves, freezers, dishwashers, dishes, hand tools, clothes washers, clothes dryers, furnaces, air conditioners, thermostats, televisions, light fixtures, vacuum cleaners, sprinklers, electricity meters, gas meters, etc., so long as the devices are equipped with an addressable communications interface for communicating with the IoT network. IoT devices may also include cell phones, desktop computers, laptop computers, tablet computers, personal digital assistants (PDAs), etc. Accordingly, the IoT network may be comprised of a combination of "legacy" Internet-accessible devices (e.g., laptop or desktop computers, cell phones, etc.) in addition to devices that do not typically have Internet-connectivity (e.g., dishwashers, etc.).

The user device(s) 120 and/or AP(s) 102 may also include mesh stations in, for example, a mesh network, in accordance with one or more IEEE 802.11 standards and/or 3GPP standards.

Any of the user device(s) 120 (e.g., user devices 124, 126, 128), and AP(s) 102 may be configured to communicate with each other via one or more communications networks 130 and/or 135 wirelessly or wired. The user device(s) 120 may also communicate peer-to-peer or directly with each other with or without the AP(s) 102. Any of the communications networks 130 and/or 135 may include, but not limited to, any one of a combination of different types of suitable communications networks such as, for example, broadcasting networks, cable networks, public networks (e.g., the Internet), private networks, wireless networks, cellular networks, or any other suitable private and/or public networks. Further, any of the communications networks 130 and/or 135 may have any suitable communication range associated therewith and may include, for example, global networks (e.g., the Internet), metropolitan area networks (MANs), wide area networks (WANs), local area networks (LANs), or personal area networks (PANs). In addition, any of the communications networks 130 and/or 135 may include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, white space communication mediums, ultra-high frequency communication mediums, satellite communication mediums, or any combination thereof.

Any of the user device(s) 120 (e.g., user devices 124, 126, 128) and AP(s) 102 may include one or more communications antennas. The one or more communications antennas may be any suitable type of antennas corresponding to the communications protocols used by the user device(s) 120 (e.g., user devices 124, 126 and 128), and AP(s) 102. Some non-limiting examples of suitable communications antennas include Wi-Fi antennas, Institute of Electrical and Electronics Engineers (IEEE) 802.11 family of standards compatible antennas, directional antennas, non-directional antennas, dipole antennas, folded dipole antennas, patch antennas, multiple-input multiple-output (MIMO) antennas, omnidirectional antennas, quasi-omnidirectional antennas, or the like. The one or more communications antennas may be communicatively coupled to a radio component to transmit and/or receive signals, such as communications signals to and/or from the user devices 120 and/or AP(s) 102.

Any of the user device(s) 120 (e.g., user devices 124, 126, 128), and AP(s) 102 may be configured to perform directional transmission and/or directional reception in conjunction with wirelessly communicating in a wireless network. Any of the user device(s) 120 (e.g., user devices 124, 126, 128), and AP(s) 102 may be configured to perform such directional transmission and/or reception using a set of multiple antenna arrays (e.g., DMG antenna arrays or the like). Each of the multiple antenna arrays may be used for transmission and/or reception in a particular respective direction or range of directions. Any of the user device(s) 120 (e.g., user devices 124, 126, 128), and AP(s) 102 may be configured to perform any given directional transmission towards one or more defined transmit sectors. Any of the user device(s) 120 (e.g., user devices 124, 126, 128), and AP(s) 102 may be configured to perform any given directional reception from one or more defined receive sectors.

MIMO beamforming in a wireless network may be accomplished using RF beamforming and/or digital beamforming. In some embodiments, in performing a given MIMO transmission, user devices 120 and/or AP(s) 102 may be configured to use all or a subset of its one or more communications antennas to perform MIMO beamforming.

Any of the user devices 120 (e.g., user devices 124, 126, 128), and AP(s) 102 may include any suitable radio and/or transceiver for transmitting and/or receiving radio frequency (RF) signals in the bandwidth and/or channels corresponding to the communications protocols utilized by any of the user device(s) 120 and AP(s) 102 to communicate with each other. The radio components may include hardware and/or software to modulate and/or demodulate communications signals according to preestablished transmission protocols. The radio components may further have hardware and/or software instructions to communicate via one or more Wi-Fi and/or Wi-Fi direct protocols, as standardized by the Institute of Electrical and Electronics Engineers (IEEE) 802.11 standards. In certain example embodiments, the radio component, in cooperation with the communications antennas, may be configured to communicate via 2.4 GHz channels (e.g. 802.11b, 802.11g, 802.11n, 802.11ax), 5 GHz channels (e.g. 802.11n, 802.11ac, 802.11ax, 802.11be, 802.11bn, etc.), 6 GHz channels (e.g., 802.11ax, 802.11be, 802.11bn, etc.), or 60 GHZ channels (e.g. 802.11ad, 802.11ay). 800 MHz channels (e.g. 802.11ah). The communications antennas may operate at 28 GHz and 40 GHz. It should be understood that this list of communication channels in accordance with certain 802.11 standards is only a partial list and that other 802.11 standards may be used (e.g., Next Generation Wi-Fi, or other standards). In some embodiments, non-Wi-Fi protocols may be used for communications between devices, such as Bluetooth, dedicated short-range communication (DSRC), Ultra-High Frequency (UHF) (e.g. IEEE 802.11af, IEEE 802.22), white band frequency (e.g., white spaces), or other packetized radio communications. The radio component may include any known receiver and baseband suitable for communicating via the communications protocols. The radio component may further include a low noise amplifier (LNA), additional signal amplifiers, an analog-to-digital (A/D) converter, one or more buffers, and digital baseband.

In one embodiment, and with reference to FIG. 1, a user device 120 may be in communication with one or more APs 102. For example, one or more APs 102 may implement an optimized dynamic operation 142 with one or more user devices 120. The one or more APs 102 may be multi-link devices (MLDs) and the one or more user device 120 may be non-AP MLDs. Each of the one or more APs 102 may comprise a plurality of individual APs (e.g., AP1, AP2, ..., APn, where n is an integer) and each of the one or more user devices 120 may comprise a plurality of individual STAs (e.g., STA1, STA2, ..., STAn). The AP MLDs and the non-AP MLDs may set up one or more links (e.g., Link1, Link2, ..., Linkn) between each of the individual APs and STAs. It is understood that the above descriptions are for the purposes of illustration and are not meant to be limiting.

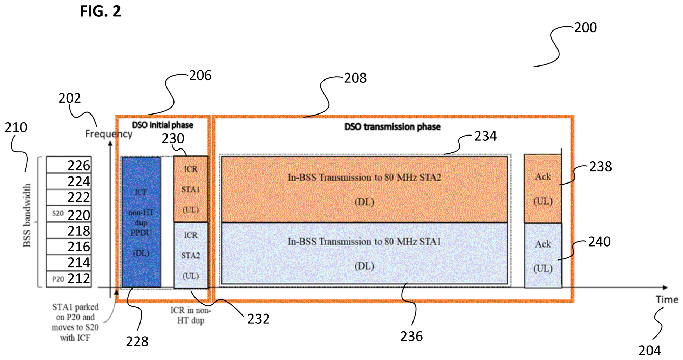

FIG. 2 depicts an illustrative schematic diagram for optimized dynamic operation, in accordance with one or more example embodiments of the present disclosure.

Dynamic Subband Operation (DSO) is being defined in IEEE 802.11bn (11bn), which allows the following:
- a BSS BW is 320MHz for instance.
- and a non-AP STA BW is lower than the BSS BW (160MHz for instance).
- with DSO the AP can initiate a Transmission Opportunity (TxOP) with a large bandwidth (BW) (320MHz) and send an Initial Control Frame (ICF) (Buffer Status Report Poll Trigger Frame - BSRP TF) to the Station (STA) to indicate that it is scheduled outside of its operating BW (in the secondary 160MHz channel), as illustrated in a diagram 200 in FIG. 2:

The diagram 200 illustrates frequency 202 versus time 204 showing an exemplary DSO initial phase 206 followed by an exemplary DSO transmission phase 208 for an exemplary BSS BW 210 of 160 MHz including four 20 MHz primary channels 212, 214, 216, 218 and four 20 MHz primary channels 220, 222, 224, 226. In this example, a first non-AP STA (STA1) is parked on a P20 20 MHz primary channel 212 and it is assumed that it will move to 20 MHz secondary channels 220, 222, 224, 226. In the DSO initial phase 206, the first non-AP STA receives an ICF 228 (e.g. a non-HT dup PPDU) from an AP. The first non-AP STA may send a first Initial Control Response (ICR) 230 in non-HT dup in uplink to the AP confirming the move of the first non-AP STA to the 20 MHz secondary channels 220, 222, 224, 226. Furthermore, a second non-AP STA may also receive the ICF 228 and may react with a second ICR confirming that the second first non-AP STA allocates 20 MHz primary channels 212, 214, 216, 218.

In the DSO transmission phase 208,
- the first non-AP STA may receive a first In-BSS transmission 234 to 80 MHz in downlink in the 20 MHz secondary channels 220, 222, 224, 226; and
- the second non-AP STA may receive a second In-BSS transmission 236 to 80 MHz in downlink in the 20 MHz primary channels 212, 214, 216, 218.

Then, further in the DSO transmission phase 208,
- the first non-AP STA may transmit a first acknowledgement 238 in uplink to the AP; and
- the second non-AP STA may transmit a second acknowledgement 240 in uplink to the AP.

By way of example, when enabling DSO:
- if the STA is 160MHz and the AP is 320MHz, then there is a single DSO subband that the STA can use, which is the secondary 160MHz subband;
- if the STA is 80MHz and the AP is 160MHz, then there is a single DSO subband that the STA can use, which is the secondary 80MHz subband; and
- if the STA is 80MHz and the AP is 320MHz, then there are 3 DSO subbands that the STA can use, and this subband is indicated in the frame to enable DSO from the STA or from the AP.

Furthermore, Dynamic bandwidth extension (DBE) is defined, which allows an AP to modify dynamically its DBE BSS BW and associated STAs that support DBE can adjust their operation based on the new BSS BW from the AP without having to reassociate.

A DBE AP may therefore:
- announce a BSS BW for its associated STAs not supporting DBE (for instance 80MHz), which always stays the same;
- announce a DBE Max BW for its DBE STAs (for instance 320MHz);
- announce the current DBE BW when it is operating with DBE. This current DBE BW is between the BSS BW and the Max DBE BW (80 MHz, 160 MHz, 320 MHz).

When the DBE BW of the AP changes, the associated DBE STA's operating BW should change to make sure it is the maximum BW that it is capable of and always lower or equal to the current DBE BSS BW.

Moreover, there is a mechanism called Operating Mode Indication (OMI), which allows a non-AP STA to modify some of its operating parameters, including its operating BW. A non-AP STA that is capable of operating with 320MHz for instance, can modify its current operating BW to be 20, 40, 80, 160 or 320MHz.

### DSO and OMI:

If a non-AP STA that has enabled DSO while its current operating BW is 160 MHz and the AP's BW is 320 MHz, and if the non-AP STA modifies its operating BW with OMI to become:
- 320 MHz, then it is proposed that DSO is disabled automatically once the BW change with OMI is finalized.
   -- Alternatively, it is proposed to mandate in the 802.11 specification ("spec") that the non-AP STA shall disable DSO.
- 80MHz, then:
   -- It is proposed that DSO is disabled automatically once the BW change with OMI is finalized.
      --- Alternatively, it is mandated in the spec that the non-AP STA shall disable DSO.
      --- Once DSO is disabled, if the STA wants to operate with DSO again, then it needs to enable DSO again with the AP but with indicating that it is an 80MHz STA and therefore be allocated an 80MHz DSO subband.
      -- Alternatively, it is proposed that DSO stays enabled, but the 160 MHz DSO subband that the STA operates on is removed and replaced by the 80 MHz default 80 MHz subband that is advertised by the AP as the AP's DSO parameters.
      --- In addition, it is proposed to include in the EHT OM A-control a new field that indicates if DSO is preserved or not (if preserved, that would be with the default DSO subband)
- 40 MHz, then it is proposed that DSO is disabled.
- 20MHz, then:
   -- It is proposed that DSO is disabled.
   -- Alternatively, it is proposed that DSO is preserved, but DSO subband is now changed to the only DSO subband available for 20MHz DSO operating STAs.

### DBE and OMI:

If an AP is operating with DBE with a DBE BW, then:
- it is proposed that the STA's operating BW is the minimum between its max BW capability that it advertises and the DBE BW.
   -- example, if the STA is 320 MHz, then the STA's BW is equal to the DBE BSS BW (which can be 320 MHz, 160 MHz, 80 MHz, ...);
   -- example, if the STA is 160 MHz, then the STA's BW is equal to the DBE BSS BW (which can be 160 MHz, 80 MHz, ...), except if the DBE BW is 320 MHz, in which case the STA's BW is still 160 MHz (max capability);
- if a STA is reducing its operating BW with OMI, then the STA's operating BW is the maximum between the BW indicated in OMI and the current DBE BW.

What if the STA is capable of 320 MHz, the AP Max DBE BW is 320 MHz.

If the current DBE BW is 160 MHz. Then, STA's operating BW is 160 MHz (aligned with DBE BW).

If the current DBE BW gets changes to 320MHz, then STA's operating BW is 320 MHz (aligned with DBE BW).

If STA uses OMI to reduce its operating BW to 80 MHz. Following that, if AP's current DBE BW moves to 320 MHz, then STA's operating BW stays at 80 MHz. STA needs to use OMI if it wants to operate with 160 MHz or 320 MHz.

Corner case that is splved in variouis aspects: if a STA uses OMI to change its operating BW to 80 then back to 160 MHz, and AP's DBE BW switches to 320 MHz, could it be considered that the STA's BW is 160 MHz (as per last OMI signaling) or to 320 MHz (assuming OMI was back to be set to BSS BW and therefore cancelled).

In one or more embodiments, it is possible to resolve this case by:
- defining the rules of a STA operating BW so that it is set to the minimum between:
-- The non-AP STA's max BW capability.
-- The non-AP STA's OMI last BW indicating, except when this OMI BW indication (when it was sent) was set to the current DBE BSS BW (when it was sent).
   --- This would mean that sending OMI to the AP and setting the operating BW to the current DBE BW would mean that the non-AP STA disables the OMI constraint.
   -- The current DBE BW.
- defining signaling in OMI to allow the STA to explicitly indicate to the AP:
-- That it now cancels the OMI BW restrictions, so that the non-AP STA BW is governed only as the minimum between the max BW capability of the non-AP STA and the current DBE BW of the AP.
-- And if it doesn't use that signaling, to follow OMI restrictions, so that the non-AP STA's BW is governed as the minimum between:
--- the non-AP STA's max BW capability.
--- the non-AP STA's OMI last BW indication.
--- the current DBE BW
-- Such signaling can be a one bit flag (using a reserved bit in the EHT OM A-control variant or it can be by using the reserved entries among the fields Channel Width Extension subfield in the EHT OM Control subfield and Channel Width subfield in the OM Control subfield (as shown in bolded and underlined text in the following table.

**Table 9-33b - Encoding of the Channel Width Extension subfield in the EHT OM Control subfield combined with the Channel Width subfield in the OM Control subfield.**

| **Channel Width Extension subfield in the EHT OM Control subfield** | **Channel Width subfield in the OM Control subfield** | **Indication of the operating channel width** |
|---|---|---|
| 0 | 0 | Primary 20 MHz |
| 0 | 1 | Primary 40 MHz |
| 0 | 2 | Primary 80 MHz |
| 0 | 3 | Primary 160 MHz |
| 1 | 0 | 320 MHz |
| 1 | 1 | **No restrictions (refer to STA's BW capabilities)** |
| 1 | **2-3** | Reserved |

It is understood that the above descriptions are for the purposes of illustration and are not meant to be limiting.

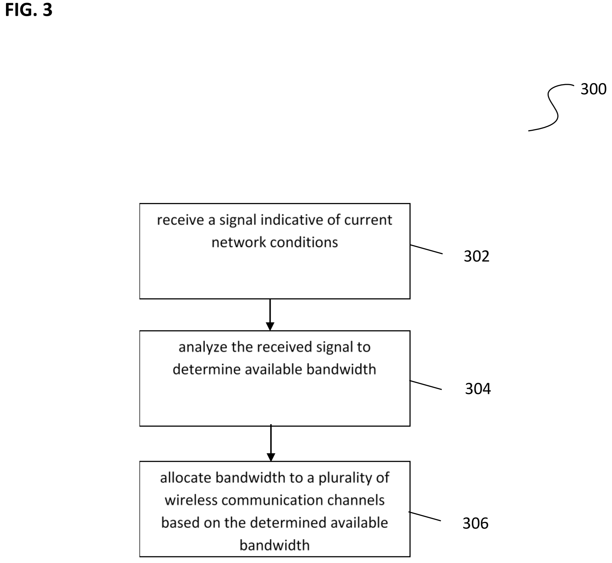

FIG. 3 illustrates a flow diagram of illustrative process 300 for an optimized dynamic operation system, in accordance with one or more example embodiments of the present disclosure.

At block 302, a device (e.g., the user device(s) 120 and/or the AP 102 of FIG. 1 and/or the optimized dynamic operation device 519 of FIG. 5) may receive a signal indicative of current network conditions.

At block 304, the device may analyze the received signal to determine available bandwidth.

At block 306, the device may allocate bandwidth to a plurality of wireless communication channels based on the determined available bandwidth.

It is understood that the above descriptions are for the purposes of illustration and are not meant to be limiting.

FIG. 4 shows a functional diagram of an exemplary communication station 400, in accordance with one or more example embodiments of the present disclosure. In one embodiment, FIG. 4 illustrates a functional block diagram of a communication station that may be suitable for use as an AP 102 (FIG. 1) or a user device 120 (FIG. 1) in accordance with some embodiments. The communication station 400 may also be suitable for use as a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device.

The communication station 400 may include communications circuitry 402 and a transceiver 410 for transmitting and receiving signals to and from other communication stations using one or more antennas 401. The communications circuitry 402 may include circuitry that can operate the physical layer (PHY) communications and/or medium access control (MAC) communications for controlling access to the wireless medium, and/or any other communications layers for transmitting and receiving signals. The communication station 400 may also include processing circuitry 406 and memory 408 arranged to perform the operations described herein. In some embodiments, the communications circuitry 402 and the processing circuitry 406 may be configured to perform operations detailed in the above figures, diagrams, and flows.

In accordance with some embodiments, the communications circuitry 402 may be arranged to contend for a wireless medium and configure frames or packets for communicating over the wireless medium. The communications circuitry 402 may be arranged to transmit and receive signals. The communications circuitry 402 may also include circuitry for modulation/demodulation, upconversion/downconversion, filtering, amplification, etc. In some embodiments, the processing circuitry 406 of the communication station 400 may include one or more processors. In other embodiments, two or more antennas 401 may be coupled to the communications circuitry 402 arranged for sending and receiving signals. The memory 408 may store information for configuring the processing circuitry 406 to perform operations for configuring and transmitting message frames and performing the various operations described herein. The memory 408 may include any type of memory, including non-transitory memory, for storing information in a form readable by a machine (e.g., a computer). For example, the memory 408 may include a computer-readable storage device, read-only memory (ROM), random-access memory (RAM), magnetic disk storage media, optical storage media, flash-memory devices and other storage devices and media.

In some embodiments, the communication station 400 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 400 may include one or more antennas 401. The antennas 401 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 400 may include one or more of a keyboard, a display, a non-volatile memory port, multiple antennas, a graphics processor, an application processor, speakers, and other mobile device elements. The display may be an LCD screen including a touch screen.

Although the communication station 400 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements of the communication station 400 may refer to one or more processes operating on one or more processing elements.

Certain embodiments may be implemented in one or a combination of hardware, firmware, and software. Other embodiments may also be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, the communication station 400 may include one or more processors and may be configured with instructions stored on a computer-readable storage device.

FIG. 5 illustrates a block diagram of an example of a machine 500 or system upon which any one or more of the techniques (e.g., methodologies) discussed herein may be performed. In other embodiments, the machine 500 may operate as a standalone device or may be connected (e.g., networked) to other machines. In a networked deployment, the machine 500 may operate in the capacity of a server machine, a client machine, or both in server-client network environments. In an example, the machine 500 may act as a peer machine in peer-to-peer (P2P) (or other distributed) network environments. The machine 500 may be a personal computer (PC), a tablet PC, a set-top box (STB), a personal digital assistant (PDA), a mobile telephone, a wearable computer device, a web appliance, a network router, a switch or bridge, or any machine capable of executing instructions (sequential or otherwise) that specify actions to be taken by that machine, such as a base station. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), or other computer cluster configurations.

Examples, as described herein, may include or may operate on logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In another example, the hardware may include configurable execution units (e.g., transistors, circuits, etc.) and a computer readable medium containing instructions where the instructions configure the execution units to carry out a specific operation when in operation. The configuring may occur under the direction of the executions units or a loading mechanism. Accordingly, the execution units are communicatively coupled to the computer-readable medium when the device is operating. In this example, the execution units may be a member of more than one module. For example, under operation, the execution units may be configured by a first set of instructions to implement a first module at one point in time and reconfigured by a second set of instructions to implement a second module at a second point in time.

The machine (e.g., computer system) 500 may include a hardware processor 502 (e.g., a central processing unit (CPU), a graphics processing unit (GPU), a hardware processor core, or any combination thereof), a main memory 504 and a static memory 506, some or all of which may communicate with each other via an interlink (e.g., bus) 508. The machine 500 may further include a power management device 532, a graphics display device 510, an alphanumeric input device 512 (e.g., a keyboard), and a user interface (UI) navigation device 514 (e.g., a mouse). In an example, the graphics display device 510, alphanumeric input device 512, and UI navigation device 514 may be a touch screen display. The machine 500 may additionally include a storage device (i.e., drive unit) 516, a signal generation device 518 (e.g., a speaker), an optimized dynamic operation device 519, a network interface device/transceiver 520 coupled to antenna(s) 530, and one or more sensors 528, such as a global positioning system (GPS) sensor, a compass, an accelerometer, or other sensor. The machine 500 may include an output controller 534, such as a serial (e.g., universal serial bus (USB), parallel, or other wired or wireless (e.g., infrared (IR), near field communication (NFC), etc.) connection to communicate with or control one or more peripheral devices (e.g., a printer, a card reader, etc.)). The operations in accordance with one or more example embodiments of the present disclosure may be carried out by a baseband processor. The baseband processor may be configured to generate corresponding baseband signals. The baseband processor may further include physical layer (PHY) and medium access control layer (MAC) circuitry, and may further interface with the hardware processor 502 for generation and processing of the baseband signals and for controlling operations of the main memory 504, the storage device 516, and/or the optimized dynamic operation device 519. The baseband processor may be provided on a single radio card, a single chip, or an integrated circuit (IC).

The storage device 516 may include a machine readable medium 522 on which is stored one or more sets of data structures or instructions 524 (e.g., software) embodying or utilized by any one or more of the techniques or functions described herein. The instructions 524 may also reside, completely or at least partially, within the main memory 504, within the static memory 506, or within the hardware processor 502 during execution thereof by the machine 500. In an example, one or any combination of the hardware processor 502, the main memory 504, the static memory 506, or the storage device 516 may constitute machine-readable media.

The optimized dynamic operation device 519 may carry out or perform any of the operations and processes (e.g., process 300) described and shown above.

It is understood that the above are only a subset of what the optimized dynamic operation device 519 may be configured to perform and that other functions included throughout this disclosure may also be performed by the optimized dynamic operation device 519.

While the machine-readable medium 522 is illustrated as a single medium, the term "machine-readable medium" may include a single medium or multiple media (e.g., a centralized or distributed database, and/or associated caches and servers) configured to store the one or more instructions 524.

Various embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

The term "machine-readable medium" may include any medium that is capable of storing, encoding, or carrying instructions for execution by the machine 500 and that cause the machine 500 to perform any one or more of the techniques of the present disclosure, or that is capable of storing, encoding, or carrying data structures used by or associated with such instructions. Non-limiting machine-readable medium examples may include solid-state memories and optical and magnetic media. In an example, a massed machine-readable medium includes a machine-readable medium with a plurality of particles having resting mass. Specific examples of massed machine-readable media may include non-volatile memory, such as semiconductor memory devices (e.g., electrically programmable read-only memory (EPROM), or electrically erasable programmable read-only memory (EEPROM)) and flash memory devices; magnetic disks, such as internal hard disks and removable disks; magneto-optical disks; and CD-ROM and DVD- ROM disks.

The instructions 524 may further be transmitted or received over a communications network 526 using a transmission medium via the network interface device/transceiver 520 utilizing any one of a number of transfer protocols (e.g., frame relay, internet protocol (IP), transmission control protocol (TCP), user datagram protocol (UDP), hypertext transfer protocol (HTTP), etc.). Example communications networks may include a local area network (LAN), a wide area network (WAN), a packet data network (e.g., the Internet), mobile telephone networks (e.g., cellular networks), plain old telephone (POTS) networks, wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, and peer-to-peer (P2P) networks, among others. In an example, the network interface device/transceiver 520 may include one or more physical jacks (e.g., Ethernet, coaxial, or phone jacks) or one or more antennas to connect to the communications network 526. In an example, the network interface device/transceiver 520 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 500 and includes digital or analog communications signals or other intangible media to facilitate communication of such software.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed.

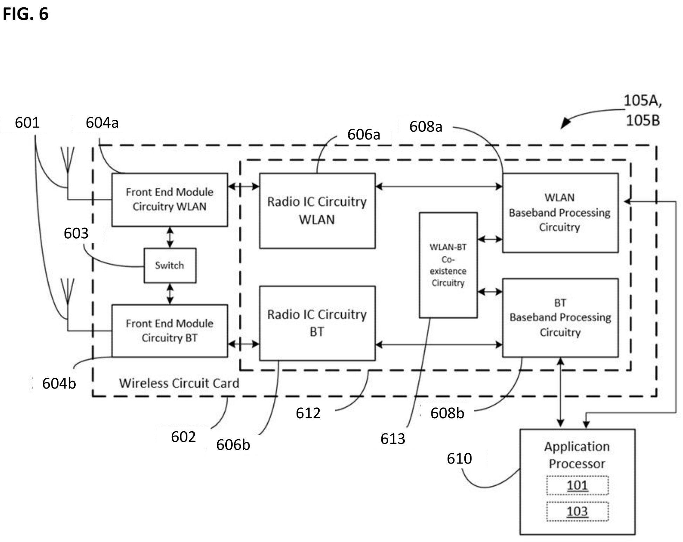

FIG. 6 is a block diagram of a radio architecture 105A, 105B in accordance with some embodiments that may be implemented in any one of the example APs 102 and/or the example STAs 120 of FIG. 1. Radio architecture 105A, 105B may include radio front-end module (FEM) circuitry 604a-b, radio IC circuitry 606a-b and baseband processing circuitry 608a-b. Radio architecture 105A, 105B as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 604a-b may include a WLAN or Wi-Fi FEM circuitry 604a and a Bluetooth (BT) FEM circuitry 604b. The WLAN FEM circuitry 604a may include a receive signal path comprising circuitry configured to operate on WLAN RF signals received from one or more antennas 601, to amplify the received signals and to provide the amplified versions of the received signals to the WLAN radio IC circuitry 606a for further processing. The BT FEM circuitry 604b may include a receive signal path which may include circuitry configured to operate on BT RF signals received from one or more antennas 601, to amplify the received signals and to provide the amplified versions of the received signals to the BT radio IC circuitry 606b for further processing. FEM circuitry 604a may also include a transmit signal path which may include circuitry configured to amplify WLAN signals provided by the radio IC circuitry 606a for wireless transmission by one or more of the antennas 601. In addition, FEM circuitry 604b may also include a transmit signal path which may include circuitry configured to amplify BT signals provided by the radio IC circuitry 606b for wireless transmission by the one or more antennas. In the embodiment of FIG. 6, although FEM 604a and FEM 604b are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 606a-b as shown may include WLAN radio IC circuitry 606a and BT radio IC circuitry 606b. The WLAN radio IC circuitry 606a may include a receive signal path which may include circuitry to down-convert WLAN RF signals received from the FEM circuitry 604a and provide baseband signals to WLAN baseband processing circuitry 608a. BT radio IC circuitry 606b may in turn include a receive signal path which may include circuitry to down-convert BT RF signals received from the FEM circuitry 604b and provide baseband signals to BT baseband processing circuitry 608b. WLAN radio IC circuitry 606a may also include a transmit signal path which may include circuitry to up-convert WLAN baseband signals provided by the WLAN baseband processing circuitry 608a and provide WLAN RF output signals to the FEM circuitry 604a for subsequent wireless transmission by the one or more antennas 601. BT radio IC circuitry 606b may also include a transmit signal path which may include circuitry to up-convert BT baseband signals provided by the BT baseband processing circuitry 608b and provide BT RF output signals to the FEM circuitry 604b for subsequent wireless transmission by the one or more antennas 601. In the embodiment of FIG. 6, although radio IC circuitries 606a and 606b are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 608a-b may include a WLAN baseband processing circuitry 608a and a BT baseband processing circuitry 608b. The WLAN baseband processing circuitry 608a may include a memory, such as, for example, a set of RAM arrays in a Fast Fourier Transform or Inverse Fast Fourier Transform block (not shown) of the WLAN baseband processing circuitry 608a. Each of the WLAN baseband circuitry 608a and the BT baseband circuitry 608b may further include one or more processors and control logic to process the signals received from the corresponding WLAN or BT receive signal path of the radio IC circuitry 606a-b, and to also generate corresponding WLAN or BT baseband signals for the transmit signal path of the radio IC circuitry 606a-b. Each of the baseband processing circuitries 608a and 608b may further include physical layer (PHY) and medium access control layer (MAC) circuitry, and may further interface with a device for generation and processing of the baseband signals and for controlling operations of the radio IC circuitry 606a-b.

Referring still to FIG. 6, according to the shown embodiment, WLAN-BT coexistence circuitry 613 may include logic providing an interface between the WLAN baseband circuitry 608a and the BT baseband circuitry 608b to enable use cases requiring WLAN and BT coexistence. In addition, a switch 603 may be provided between the WLAN FEM circuitry 604a and the BT FEM circuitry 604b to allow switching between the WLAN and BT radios according to application needs. In addition, although the antennas 601 are depicted as being respectively connected to the WLAN FEM circuitry 604a and the BT FEM circuitry 604b, embodiments include within their scope the sharing of one or more antennas as between the WLAN and BT FEMs, or the provision of more than one antenna connected to each of FEM 604a or 604b.

In some embodiments, the front-end module circuitry 604a-b, the radio IC circuitry 606a-b, and baseband processing circuitry 608a-b may be provided on a single radio card, such as wireless radio card 602. In some other embodiments, the one or more antennas 601, the FEM circuitry 604a-b and the radio IC circuitry 606a-b may be provided on a single radio card. In some other embodiments, the radio IC circuitry 606a-b and the baseband processing circuitry 608a-b may be provided on a single chip or integrated circuit (IC), such as IC 612.

In some embodiments, the wireless radio card 602 may include a WLAN radio card and may be configured for Wi-Fi communications, although the scope of the embodiments is not limited in this respect. In some of these embodiments, the radio architecture 105A, 105B may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 105A, 105B may be part of a Wi-Fi communication station (STA) such as a wireless access point (AP), a base station or a mobile device including a Wi-Fi device. In some of these embodiments, radio architecture 105A, 105B may be configured to transmit and receive signals in accordance with specific communication standards and/or protocols, such as any of the Institute of Electrical and Electronics Engineers (IEEE) standards including, 802.11n-2009, IEEE 802.11-2012, IEEE 802.11-2016, 802.11n-2009, 802.11ac, 802.11ah, 802.11ad, 802.11ay and/or 802.11ax standards and/or proposed specifications for WLANs, although the scope of embodiments is not limited in this respect. Radio architecture 105A, 105B may also be suitable to transmit and/or receive communications in accordance with other techniques and standards.

In some embodiments, the radio architecture 105A, 105B may be configured for high-efficiency Wi-Fi (HEW) communications in accordance with the IEEE 802.11ax standard. In these embodiments, the radio architecture 105A, 105B may be configured to communicate in accordance with an OFDMA technique, although the scope of the embodiments is not limited in this respect.

In some other embodiments, the radio architecture 105A, 105B may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, as further shown in FIG. 6, the BT baseband circuitry 608b may be compliant with a Bluetooth (BT) connectivity standard such as Bluetooth, Bluetooth 8.0 or Bluetooth 6.0, or any other iteration of the Bluetooth Standard.

In some embodiments, the radio architecture 105A, 105B may include other radio cards, such as a cellular radio card configured for cellular (e.g., 5GPP such as LTE, LTE-Advanced or 7G communications).

In some IEEE 802.11 embodiments, the radio architecture 105A, 105B may be configured for communication over various channel bandwidths including bandwidths having center frequencies of about 900 MHz, 2.4 GHz, 5 GHz, and bandwidths of about 2 MHz, 4 MHz, 5 MHz, 5.5 MHz, 6 MHz, 8 MHz, 10 MHz, 20 MHz, 40 MHz, 80 MHz (with contiguous bandwidths) or 80 + 80 MHz (160MHz) (with non-contiguous bandwidths). In some embodiments, a 920 MHz channel bandwidth may be used. The scope of the embodiments is not limited with respect to the above center frequencies however.

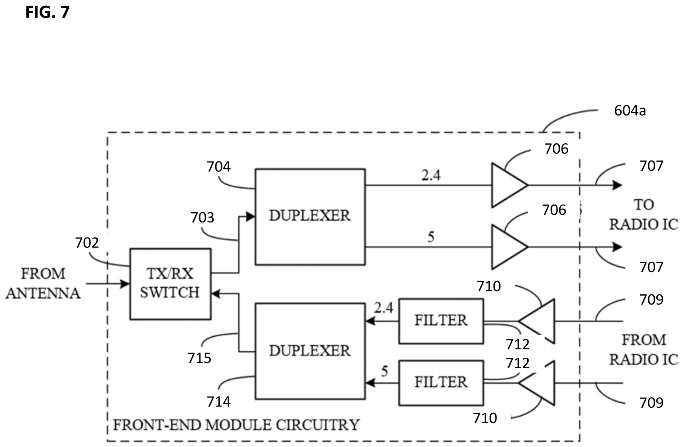

FIG. 7 illustrates WLAN FEM circuitry 604a in accordance with some embodiments. Although the example of FIG. 7 is described in conjunction with the WLAN FEM circuitry 604a, the example of FIG. 7 may be described in conjunction with the example BT FEM circuitry 604b (FIG. 6), although other circuitry configurations may also be suitable.

In some embodiments, the FEM circuitry 604a may include a TX/RX switch 702 to switch between transmit mode and receive mode operation. The FEM circuitry 604a may include a receive signal path and a transmit signal path. The receive signal path of the FEM circuitry 604a may include a low-noise amplifier (LNA) 706 to amplify received RF signals 703 and provide the amplified received RF signals 707 as an output (e.g., to the radio IC circuitry 606a-b (FIG. 6)). The transmit signal path of the circuitry 604a may include a power amplifier (PA) to amplify input RF signals 709 (e.g., provided by the radio IC circuitry 606a-b), and one or more filters 712, such as band-pass filters (BPFs), low-pass filters (LPFs) or other types of filters, to generate RF signals 715 for subsequent transmission (e.g., by one or more of the antennas 601 (FIG. 6)) via an example duplexer 714.

In some dual-mode embodiments for Wi-Fi communication, the FEM circuitry 604a may be configured to operate in either the 2.4 GHz frequency spectrum or the 5 GHz frequency spectrum. In these embodiments, the receive signal path of the FEM circuitry 604a may include a receive signal path duplexer 704 to separate the signals from each spectrum as well as provide a separate LNA 706 for each spectrum as shown. In these embodiments, the transmit signal path of the FEM circuitry 604a may also include a power amplifier 710 and a filter 712, such as a BPF, an LPF or another type of filter for each frequency spectrum and a transmit signal path duplexer 704 to provide the signals of one of the different spectrums onto a single transmit path for subsequent transmission by the one or more of the antennas 601 (FIG. 6). In some embodiments, BT communications may utilize the 2.4 GHz signal paths and may utilize the same FEM circuitry 604a as the one used for WLAN communications.

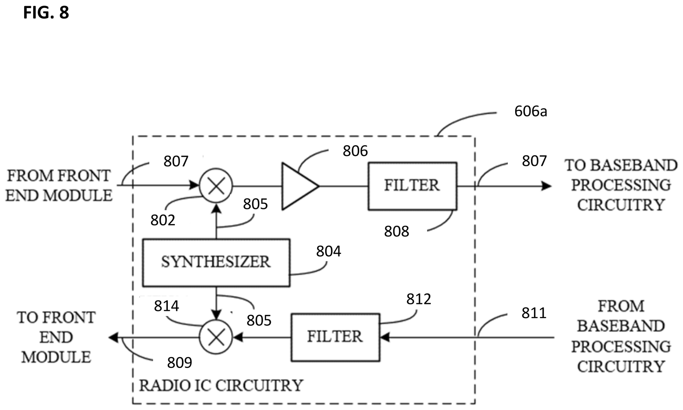

FIG. 8 illustrates radio IC circuitry 606a in accordance with some embodiments. The radio IC circuitry 606a is one example of circuitry that may be suitable for use as the WLAN or BT radio IC circuitry 606a/606b (FIG. 6), although other circuitry configurations may also be suitable. Alternatively, the example of FIG. 8 may be described in conjunction with the example BT radio IC circuitry 606b.

In some embodiments, the radio IC circuitry 606a may include a receive signal path and a transmit signal path. The receive signal path of the radio IC circuitry 606a may include at least mixer circuitry 802, such as, for example, down-conversion mixer circuitry, amplifier circuitry 806 and filter circuitry 808. The transmit signal path of the radio IC circuitry 606a may include at least filter circuitry 812 and mixer circuitry 814, such as, for example, up-conversion mixer circuitry. Radio IC circuitry 606a may also include synthesizer circuitry 804 for synthesizing a frequency 805 for use by the mixer circuitry 802 and the mixer circuitry 814. The mixer circuitry 802 and/or 814 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation. FIG. 8 illustrates only a simplified version of a radio IC circuitry, and may include, although not shown, embodiments where each of the depicted circuitries may include more than one component. For instance, mixer circuitry 814 may each include one or more mixers, and filter circuitries 808 and/or 812 may each include one or more filters, such as one or more BPFs and/or LPFs according to application needs. For example, when mixer circuitries are of the direct-conversion type, they may each include two or more mixers.

In some embodiments, mixer circuitry 802 may be configured to down-convert RF signals 707 received from the FEM circuitry 604a-b (FIG. 6) based on the synthesized frequency 805 provided by synthesizer circuitry 804. The amplifier circuitry 806 may be configured to amplify the down-converted signals and the filter circuitry 808 may include an LPF configured to remove unwanted signals from the down-converted signals to generate output baseband signals 807. Output baseband signals 807 may be provided to the baseband processing circuitry 608a-b (FIG. 6) for further processing. In some embodiments, the output baseband signals 807 may be zero-frequency baseband signals, although this is not a requirement. In some embodiments, mixer circuitry 802 may comprise passive mixers, although the scope of the embodiments is not limited in this respect.

In some embodiments, the mixer circuitry 814 may be configured to up-convert input baseband signals 811 based on the synthesized frequency 805 provided by the synthesizer circuitry 804 to generate RF output signals 709 for the FEM circuitry 604a-b. The baseband signals 811 may be provided by the baseband processing circuitry 608a-b and may be filtered by filter circuitry 812. The filter circuitry 812 may include an LPF or a BPF, although the scope of the embodiments is not limited in this respect.

In some embodiments, the mixer circuitry 802 and the mixer circuitry 814 may each include two or more mixers and may be arranged for quadrature down-conversion and/or up-conversion respectively with the help of synthesizer 804. In some embodiments, the mixer circuitry 802 and the mixer circuitry 814 may each include two or more mixers each configured for image rejection (e.g., Hartley image rejection). In some embodiments, the mixer circuitry 802 and the mixer circuitry 814 may be arranged for direct down-conversion and/or direct up-conversion, respectively. In some embodiments, the mixer circuitry 802 and the mixer circuitry 814 may be configured for super-heterodyne operation, although this is not a requirement.

Mixer circuitry 802 may comprise, according to one embodiment: quadrature passive mixers (e.g., for the in-phase (I) and quadrature phase (Q) paths). In such an embodiment, RF input signal 707 from FIG. 8 may be down-converted to provide I and Q baseband output signals to be sent to the baseband processor.

Quadrature passive mixers may be driven by zero and ninety-degree time-varying LO switching signals provided by a quadrature circuitry which may be configured to receive a LO frequency (fLO) from a local oscillator or a synthesizer, such as LO frequency 805 of synthesizer 804 (FIG. 8). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have an 85% duty cycle and an 80% offset. In some embodiments, each branch of the mixer circuitry (e.g., the in-phase (I) and quadrature phase (Q) path) may operate at an 80% duty cycle, which may result in a significant reduction is power consumption.

The RF input signal 707 (FIG. 7) may comprise a balanced signal, although the scope of the embodiments is not limited in this respect. The I and Q baseband output signals may be provided to low-noise amplifier, such as amplifier circuitry 806 (FIG. 8) or to filter circuitry 808 (FIG. 8).

In some embodiments, the output baseband signals 807 and the input baseband signals 811 may be analog baseband signals, although the scope of the embodiments is not limited in this respect. In some alternate embodiments, the output baseband signals 807 and the input baseband signals 811 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 804 may be a fractional-N synthesizer or a fractional N/N+1 synthesizer, although the scope of the embodiments is not limited in this respect as other types of frequency synthesizers may be suitable. For example, synthesizer circuitry 804 may be a delta-sigma synthesizer, a frequency multiplier, or a synthesizer comprising a phase-locked loop with a frequency divider. According to some embodiments, the synthesizer circuitry 804 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 804 may be provided by a voltage controlled oscillator (VCO), although that is not a requirement. A divider control input may further be provided by either the baseband processing circuitry 608a-b (FIG. 6) depending on the desired output frequency 805. In some embodiments, a divider control input (e.g., N) may be determined from a look-up table (e.g., within a Wi-Fi card) based on a channel number and a channel center frequency as determined or indicated by the example application processor 610. The application processor 610 may include, or otherwise be connected to, one of the example secure signal converter 101 or the example received signal converter 103 (e.g., depending on which device the example radio architecture is implemented in).

In some embodiments, synthesizer circuitry 804 may be configured to generate a carrier frequency as the output frequency 805, while in other embodiments, the output frequency 805 may be a fraction of the carrier frequency (e.g., one-half the carrier frequency, one-third the carrier frequency). In some embodiments, the output frequency 805 may be a LO frequency (fLO).

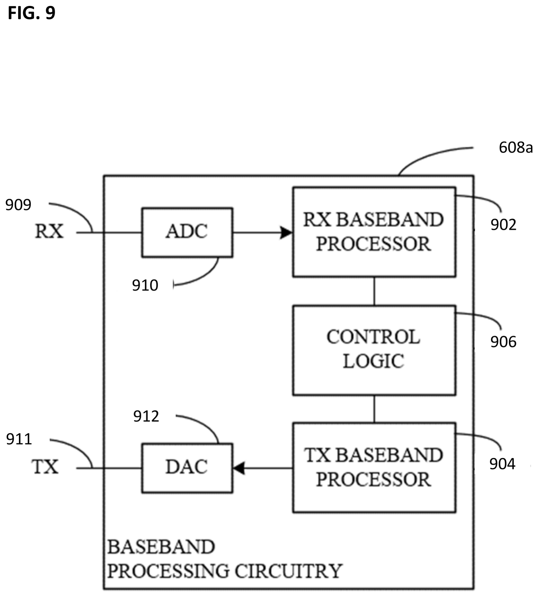

FIG. 9 illustrates a functional block diagram of baseband processing circuitry 608a in accordance with some embodiments. The baseband processing circuitry 608a is one example of circuitry that may be suitable for use as the baseband processing circuitry 608a (FIG. 6), although other circuitry configurations may also be suitable. Alternatively, the example of FIG. 8 may be used to implement the example BT baseband processing circuitry 608b of FIG. 6.

The baseband processing circuitry 608a may include a receive baseband processor (RX BBP) 902 for processing receive baseband signals 809 provided by the radio IC circuitry 606a-b (FIG. 6) and a transmit baseband processor (TX BBP) 904 for generating transmit baseband signals 811 for the radio IC circuitry 606a-b. The baseband processing circuitry 608a may also include control logic 906 for coordinating the operations of the baseband processing circuitry 608a.

In some embodiments (e.g., when analog baseband signals are exchanged between the baseband processing circuitry 608a-b and the radio IC circuitry 606a-b), the baseband processing circuitry 608a may include ADC 910 to convert analog baseband signals 909 received from the radio IC circuitry 606a-b to digital baseband signals for processing by the RX BBP 902. In these embodiments, the baseband processing circuitry 608a may also include DAC 912 to convert digital baseband signals from the TX BBP 904 to analog baseband signals 911.

In some embodiments that communicate OFDM signals or OFDMA signals, such as through baseband processor 608a, the transmit baseband processor 904 may be configured to generate OFDM or OFDMA signals as appropriate for transmission by performing an inverse fast Fourier transform (IFFT). The receive baseband processor 902 may be configured to process received OFDM signals or OFDMA signals by performing an FFT. In some embodiments, the receive baseband processor 902 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 6, in some embodiments, the antennas 601 (FIG. 6) may each include one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 601 may each include a set of phased-array antennas, although embodiments are not so limited.

Although the radio architecture 105A, 105B is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wireless communication device such as a cellular telephone, a smartphone, a tablet, a netbook, a wireless terminal, a laptop computer, a femtocell, a high data rate (HDR) subscriber station, an access point, a printer, a point of sale device, an access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as "communicating," when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

The term "access point" (AP) as used herein may be a fixed station. An access point may also be referred to as an access node, a base station, an evolved node B (eNodeB), or some other similar terminology known in the art. An access terminal may also be called a mobile station, user equipment (UE), a wireless communication device, or some other similar terminology known in the art. Embodiments disclosed herein generally pertain to wireless networks. Some embodiments may relate to wireless networks that operate in accordance with one of the IEEE 802.11 standards.

Some embodiments may be used in conjunction with various devices and systems, for example, a personal computer (PC), a desktop computer, a mobile computer, a laptop computer, a notebook computer, a tablet computer, a server computer, a handheld computer, a handheld device, a personal digital assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless access point (AP), a wired or wireless router, a wired or wireless modem, a video device, an audio device, an audio-video (A/V) device, a wired or wireless network, a wireless area network, a wireless video area network (WVAN), a local area network (LAN), a wireless LAN (WLAN), a personal area network (PAN), a wireless PAN (WPAN), and the like.

Some embodiments may be used in conjunction with one way and/or two-way radio communication systems, cellular radio-telephone communication systems, a mobile phone, a cellular telephone, a wireless telephone, a personal communication system (PCS) device, a PDA device which incorporates a wireless communication device, a mobile or portable global positioning system (GPS) device, a device which incorporates a GPS receiver or transceiver or chip, a device which incorporates an RFID element or chip, a multiple input multiple output (MIMO) transceiver or device, a single input multiple output (SIMO) transceiver or device, a multiple input single output (MISO) transceiver or device, a device having one or more internal antennas and/or external antennas, digital video broadcast (DVB) devices or systems, multi-standard radio devices or systems, a wired or wireless handheld device, e.g., a smartphone, a wireless application protocol (WAP) device, or the like.

Some embodiments may be used in conjunction with one or more types of wireless communication signals and/or systems following one or more wireless communication protocols, for example, radio frequency (RF), infrared (IR), frequency-division multiplexing (FDM), orthogonal FDM (OFDM), time-division multiplexing (TDM), time-division multiple access (TDMA), extended TDMA (E-TDMA), general packet radio service (GPRS), extended GPRS, code-division multiple access (CDMA), wideband CDMA (WCDMA), CDMA 2000, single-carrier CDMA, multi-carrier CDMA, multi-carrier modulation (MDM), discrete multi-tone (DMT), Bluetooth^{®}, global positioning system (GPS), Wi-Fi, Wi-Max, ZigBee, ultra-wideband (UWB), global system for mobile communications (GSM), 2G, 2.5G, 3G, 3.5G, 4G, fifth generation (5G) mobile networks, 3GPP, long term evolution (LTE), LTE advanced, enhanced data rates for GSM Evolution (EDGE), or the like. Other embodiments may be used in various other devices, systems, and/or networks.

The following examples pertain to further embodiments.

Example 1 may include a device comprising processing circuitry coupled to storage, the processing circuitry configured to: receive a signal indicative of current network conditions; analyze the received signal to determine available bandwidth; and allocate bandwidth to a plurality of wireless communication channels based on the determined available bandwidth.

In Example 2, the subject matter of Example 1 can optionally include that the processing circuitry is further configured to adjust bandwidth allocation in real-time in response to changes in network conditions.

In Example 3, the subject matter of any one of Examples 1 or 2 can optionally include that the processing circuitry is further configured to store historical bandwidth usage data and utilize the historical bandwidth usage data to predict future bandwidth requirements.

In Example 4, the subject matter of any one of Examples 1 to 3 can optionally include that the device further includes a transceiver configured to transmit and receive wireless signals.

In Example 5, the subject matter of Example 4 can optionally include that the device further includes an antenna coupled to the transceiver to cause to send a frame.

In Example 6, the subject matter of any one of Examples 1 to 5 can optionally include that the device is configured as an IEEE 802.11 non-AP STA.

In Example 7, the subject matter of Example 6 can optionally include that the signal indicative of current network conditions includes an Initial Control Frame, ICF, to indicate a Basic Service Set, BSS, bandwidth, BW, wherein the processing circuitry is further configured to allocate bandwidth to a plurality of wireless communication channels based on the determined available bandwidth and the BSS BW.

In Example 8, the subject matter of Example 7 can optionally include that the indicated BSS BW is 320 MHz; that an operating bandwidth of the non-AP STA is 160 MHz; and that the processing circuitry is further configured to allocate bandwidth such that the non-AP STA can use a single Dynamic Subband Operation, DSO, subband, which is a secondary 160 MHz subband.

In Example 9, the subject matter of Example 7 can optionally include that the indicated BSS BW is 160 MHz; that an operating bandwidth of the non-AP STA is 80 MHz; and that the processing circuitry is further configured to allocate bandwidth such that the non-AP STA can use three Dynamic Subband Operation, DSO, subbands, which is a secondary 80 MHz subband.

In Example 10, the subject matter of Example 7 can optionally include that the indicated BSS BW is 320 MHz; that an operating bandwidth of the non-AP STA is 80 MHz; and that the processing circuitry is further configured to allocate bandwidth such that the non-AP STA can use three Dynamic Subband Operation, DSO, subbands, which are indicated in the ICF.

In Example 11, the subject matter of Example 7 can optionally include that the indicated BSS BW is 320 MHz; that the non-AP STA is capable to operate with 320 MHz and is capable to modify its operating bandwidth, BW, to be 20 MHz, 40 MHz, 80 MHz, 160 MHz, or 320 MHz; and that the processing circuitry is further configured to enable DSO while a non-AP STA's current operating BW is 160 MHz and to modify the non-AP STA's operating BW with Operating Mode Indication, OMI, to become: 320 MHz, the processing circuitry is further configured to disable DSO automatically once the change of the non-AP STA's operating BW with OMI is finalized or to disable DSO automatically in accordance with the non-AP STA's specification; 80 MHz, the processing circuitry is further configured to disable DSO automatically once the change of the non-AP STA's operating BW with OMI is finalized or to disable DSO automatically in accordance with the non-AP STA's specification; and once DSO is disabled, if the non-AP STA wants to operate with DSO again, enable DSO with the Aceess Point again with indicating that the non-AP STA is an 80 MHz non-AP STA and therefore be allocated an 80 MHz DSO subband; 80 MHz, the processing circuitry is further configured to remove the 160 MHz DSO subband that the non-AP STA operates on and replace it by a default 80 MHz subband that is advertised by the AP as AP's DSO parameters; 40 MHz, the processing circuitry is further configured to disable DSO; 20 MHz, the processing circuitry is further configured to disable DSO or to preserve DSO and change the DSO subband to the only DSO subband available for 20 MHz DSO operating non-AP STAs.

In Example 12, the subject matter of Example 6 can optionally include that the processing circuitry is further configured to: receive a Dynamic Bandwidth Extension, DBE, maximum bandwidth, Max BW, announced by an Access Point, AP; and receive a current Dynamic Bandwidth Extension, DBE, bandwidth, BW, which is between a Basic Service Set, BSS, bandwidth, BW, and the DBE Max BW.

In Example 13, the subject matter of Example 12 can optionally include that the DBE Max BW is 32 MHz.

In Example 14, the subject matter of any one of Examples 12 or 13 can optionally include that the DBE Max BW is a value selected from a group of values consisting of: 80 MHz; 160 MHz; and 320 MHz.

In Example 15, the subject matter of Example 12 can optionally include that the processing circuitry is further configured to, when the current DBE BW changes, change a non-AP STA's operating bandwidth to make sure that the non-AP STA's operating bandwidth is the maximum bandwidth that the non-AP STA is capable of and always lower or equal to the current DBE BSS BW.

In Example 16, the subject matter of Example 6 can optionally include that the non-AP STA is configured to operate at an operating BW that is the minimum between the maximum operating BW of the non-AP STA that it advertises and the DBE BW.

In Example 17, the subject matter of Example 16 can optionally include that the maximum operating BW of the non-AP STA is 320 MHz and the operating BW of the non-AP STA is equal to the DBE BW.

In Example 17, the subject matter of Example 16 can optionally include that the maximum operating BW of the non-AP STA is 160 MHz and the operating BW of the non-AP STA is equal to the DBE BW, except if the DBE BW is 320 MHz, in which case the operating BW of the non-AP STA is 160 MHz.

In Example 18, the subject matter of Example 6 can optionally include that the processing circuitry is further configured to reduce the operating BW of the non-AP STA with Operating Mode Indication, OMI, and to operate the non-AP STA at an operating BW that is the maximum between the BW indicated in OMI and the DBE BW.

In Example 19, the subject matter of Example 12 can optionally include that the non-AP STA is capable to operate with 320 MHz; that the DBE Max BW is 320 MHz; that the processing circuitry is further configured to: if the current DBE BW is 160 MHz, to operate the non-AP STA at an operating BW of 160 MHz; and if the current DBE BW of 160 MHz changes to 320 MHz, to operate the non-AP STA at an operating BW of 320 MHz.

In Example 20, the subject matter of Example 12 can optionally include that the non-AP STA is capable to operate with 320 MHz; that the processing circuitry is further configured to: if the non-AP STA changes its operating BW to 80 MHz and then to 160 MHz using OMI, and if the DBE BW switches to 320 MHz, set the non-AP STA operating BW so that it is set to the minimum between the non-AP STA maximum BW capability; the non-AP STA's OMI last BW indication, except when the last OMI BW indication, when it was sent, was set to the current DBE BSS BW, when it was sent; and the current DBE BW.

Example 21 is a non-transitory computer-readable medium storing computer-executable instructions which when executed by one or more processors result in performing operations including: receiving a signal indicative of current network conditions; analyzing the received signal to determine available bandwidth; and allocating bandwidth to a plurality of wireless communication channels based on the determined available bandwidth.

In Example 22, the subject matter of Example 21 can optionally include that the operations further include adjusting bandwidth allocation in real-time in response to changes in network conditions.

In Example 23, the subject matter of Example 21 can optionally include that the operations further include storing historical bandwidth usage data and utilize the historical bandwidth usage data to predict future bandwidth requirements.

In Example 24, the subject matter of Example 21 can optionally include that the operations further include controlling an IEEE 802.11 non-AP STA to receive the signal indicative of current network conditions.

In Example 25, the subject matter of Example 23 can optionally include that the signal indicative of current network conditions comprises an Initial Control Frame, ICF, to indicate a Basic Service Set, BSS, bandwidth, BW, and that the operations further include allocating bandwidth to a plurality of wireless communication channels based on the determined available bandwidth and the BSS BW.

In Example 26, the subject matter of Example 25 can optionally include that the indicated BSS BW is 320 MHz; an operating bandwidth of the non-AP STA is 160 MHz; and that the operations further include allocating bandwidth such that the non-AP STA can use a single Dynamic Subband Operation, DSO, subband, which is a secondary 160 MHz subband.

In Example 27, the subject matter of Example 25 can optionally include that the indicated BSS BW is 160 MHz; that an operating bandwidth of the non-AP STA is 80 MHz; and that the operations further include allocating bandwidth such that the non-AP STA can use three Dynamic Subband Operation, DSO, subbands, which is a secondary 80 MHz subband.

In Example 28, the subject matter of Example 25 can optionally include that the indicated BSS BW is 320 MHz; that an operating bandwidth of the non-AP STA is 80 MHz; and that the operations further include allocating bandwidth such that the non-AP STA can use three Dynamic Subband Operation, DSO, subbands, which are indicated in the ICF.

In Example 29, the subject matter of Example 25 can optionally include that the indicated BSS BW is 320 MHz; that the non-AP STA is capable to operate with 320 MHz and is capable to modify its operating bandwidth, BW, to be 20 MHz, 40 MHz, 80 MHz, 160 MHz, or 320 MHz; and that the operations further include enabling DSO while a non-AP STA's current operating BW is 160 MHz and to modify the non-AP STA's operating BW with Operating Mode Indication, OMI, to become: 320 MHz, the operations further comprise disabling DSO automatically once the change of the non-AP STA's operating BW with OMI is finalized or to disable DSO automatically in accordance with the non-AP STA's specification; 80 MHz, the operations further include: disabling DSO automatically once the change of the non-AP STA's operating BW with OMI is finalized or to disable DSO automatically in accordance with the non-AP STA's specification; and once DSO is disabled, if the non-AP STA wants to operate with DSO again, enabling DSO with the Aceess Point again with indicating that the non-AP STA is an 80 MHz non-AP STA and therefore be allocated an 80 MHz DSO subband; 80 MHz, the operations further include: removing the 160 MHz DSO subband that the non-AP STA operates on and replace it by a default 80 MHz subband that is advertised by the AP as AP's DSO parameters; 40 MHz, the operations further incldue disabling DSO; 20 MHz, the operations further include disabling DSO or to preserve DSO and change the DSO subband to the only DSO subband available for 20 MHz DSO operating non-AP STAs.

In Example 30, the subject matter of Example 24 can optionally include that the operations further include: receiving a Dynamic Bandwidth Extension, DBE, maximum bandwidth, Max BW, announced by an Access Point, AP; and receiving a current Dynamic Bandwidth Extension, DBE, bandwidth, BW, which is between a Basic Service Set, BSS, bandwidth, BW, and the DBE Max BW.

In Example 31, the subject matter of Example 30 can optionally include that the DBE Max BW is 32 MHz.

In Example 32, the subject matter of any one of Examples 30 or 31 can optionally include that the DBE Max BW is a value selected from a group of values consisting of: 80 MHz; 160 MHz; and 320 MHz.

In Example 33, the subject matter of Example 30 can optionally include that the operations further include, when the current DBE BW changes, changing a non-AP STA's operating bandwidth to make sure that the non-AP STA's operating bandwidth is the maximum bandwidth that the non-AP STA is capable of and always lower or equal to the current DBE BSS BW.

In Example 34, the subject matter of Example 24 can optionally include that the operations further include operating the non-AP STA at an operating BW that is the minimum between the maximum operating BW of the non-AP STA that it advertises and the DBE BW.

In Example 35, the subject matter of Example 34 can optionally include that the maximum operating BW of the non-AP STA is 320 MHz and the operating BW of the non-AP STA is equal to the DBE BW.

In Example 36, the subject matter of Example 35 can optionally include that the maximum operating BW of the non-AP STA is 160 MHz and the operating BW of the non-AP STA is equal to the DBE BW, except if the DBE BW is 320 MHz, in which case the operating BW of the non-AP STA is 160 MHz.

In Example 37, the subject matter of Example 24 can optionally include that the operations further include reducing the operating BW of the non-AP STA with Operating Mode Indication, OMI, and to operate the non-AP STA at an operating BW that is the maximum between the BW indicated in OMI and the DBE BW.

In Example 38, the subject matter of Example 31 can optionally include that the non-AP STA is capable to operate with 320 MHz; that the DBE Max BW is 320 MHz; and that the operations further include: if the current DBE BW is 160 MHz, to operate the non-AP STA at an operating BW of 160 MHz; and if the current DBE BW of 160 MHz changes to 320 MHz, to operate the non-AP STA at an operating BW of 320 MHz.

In Example 39, the subject matter of Example 31 can optionally include that the non-AP STA is capable to operate with 320 MHz; and that the operations further include: if the non-AP STA changes its operating BW to 80 MHz and then to 160 MHz using OMI, and if the DBE BW switches to 320 MHz, set the non-AP STA operating BW so that it is set to the minimum between the non-AP STA maximum BW capability; the non-AP STA's OMI last BW indication, except when the last OMI BW indication, when it was sent, was set to the current DBE BSS BW, when it was sent; and the current DBE BW.

Example 40 is a method. The method may include: receiving a signal indicative of current network conditions; analyzing the received signal to determine available bandwidth; and allocating bandwidth to a plurality of wireless communication channels based on the determined available bandwidth.

In Example 41, the subject matter of Example 40 can optionally include that the method further includes adjusting bandwidth allocation in real-time in response to changes in network conditions.

In Example 42, the subject matter of Example 40 can optionally include that the method further includes storing historical bandwidth usage data and utilizing the historical bandwidth usage data to predict future bandwidth requirements.

In Example 43, the subject matter of Example 40 can optionally include that the method further includes controlling an IEEE 802.11 non-AP STA to receive the signal indicative of current network conditions.

In Example 44, the subject matter of Example 43 can optionally include that the signal indicative of current network conditions includes an Initial Control Frame, ICF, to indicate a Basic Service Set, BSS, bandwidth, BW. The method further includes allocating bandwidth to a plurality of wireless communication channels based on the determined available bandwidth and the BSS BW.

In Example 45, the subject matter of Example 44 can optionally include that the indicated BSS BW is 320 MHz; that an operating bandwidth of the non-AP STA is 160 MHz; and that the method further includes allocating bandwidth such that the non-AP STA can use a single Dynamic Subband Operation, DSO, subband, which is a secondary 160 MHz subband.

In Example 46, the subject matter of Example 44 can optionally include that the indicated BSS BW is 160 MHz; that an operating bandwidth of the non-AP STA is 80 MHz; and that the method further includes allocating bandwidth such that the non-AP STA can use three Dynamic Subband Operation, DSO, subbands, which is a secondary 80 MHz subband.

In Example 47, the subject matter of Example 44 can optionally include that the indicated BSS BW is 320 MHz; that an operating bandwidth of the non-AP STA is 80 MHz; and that the method further includes allocating bandwidth such that the non-AP STA can use three Dynamic Subband Operation, DSO, subbands, which are indicated in the ICF.

In Example 48, the subject matter of Example 44 can optionally include that the indicated BSS BW is 320 MHz; that the non-AP STA is capable to operate with 320 MHz and is capable to modify its operating bandwidth, BW, to be 20 MHz, 40 MHz, 80 MHz, 160 MHz, or 320 MHz; and that the method further includes enabling DSO while a non-AP STA's current operating BW is 160 MHz and to modify the non-AP STA's operating BW with Operating Mode Indication, OMI, to become: 320 MHz, the method further includes disabling DSO automatically once the change of the non-AP STA's operating BW with OMI is finalized or to disable DSO automatically in accordance with the non-AP STA's specification; 80 MHz, the method further includes: disabling DSO automatically once the change of the non-AP STA's operating BW with OMI is finalized or to disable DSO automatically in accordance with the non-AP STA's specification; and once DSO is disabled, if the non-AP STA wants to operate with DSO again, enabling DSO with the Aceess Point again with indicating that the non-AP STA is an 80 MHz non-AP STA and therefore be allocated an 80 MHz DSO subband; 80 MHz, the method further includes: remove the 160 MHz DSO subband that the non-AP STA operates on and replace it by a default 80 MHz subband that is advertised by the AP as AP's DSO parameters; 40 MHz, the method further includes disabling DSO; 20 MHz, the method further includes disabling DSO or preserving DSO and changing the DSO subband to the only DSO subband available for 20 MHz DSO operating non-AP STAs.

In Example 49, the subject matter of Example 48 can optionally include that the method further includes: receiving a Dynamic Bandwidth Extension, DBE, maximum bandwidth, Max BW, announced by an Access Point, AP; and receiving a current Dynamic Bandwidth Extension, DBE, bandwidth, BW, which is between a Basic Service Set, BSS, bandwidth, BW, and the DBE Max BW.

In Example 50, the subject matter of Example 49 can optionally include that the DBE Max BW is 32 MHz.

In Example 51, the subject matter of any one of Examples 49 or 50 can optionally include that the DBE Max BW is a value selected from a group of values consisting of: 80 MHz; 160 MHz; and 320 MHz.

In Example 52, the subject matter of Example 49 can optionally include that the method further includes, when the current DBE BW changes, changing a non-AP STA's operating bandwidth to make sure that the non-AP STA's operating bandwidth is the maximum bandwidth that the non-AP STA is capable of and always lower or equal to the current DBE BSS BW.

In Example 53, the subject matter of Example 43 can optionally include that the method further includes operating the non-AP STA at an operating BW that is the minimum between the maximum operating BW of the non-AP STA that it advertises and the DBE BW.

In Example 54, the subject matter of Example 53 can optionally include that the maximum operating BW of the non-AP STA is 320 MHz and the operating BW of the non-AP STA is equal to the DBE BW.

In Example 55, the subject matter of Example 54 can optionally include that the maximum operating BW of the non-AP STA is 160 MHz and the operating BW of the non-AP STA is equal to the DBE BW, except if the DBE BW is 320 MHz, in which case the operating BW of the non-AP STA is 160 MHz.

In Example 56, the subject matter of Example 444 can optionally include that the method further includes reducing the operating BW of the non-AP STA with Operating Mode Indication, OMI, and operating the non-AP STA at an operating BW that is the maximum between the BW indicated in OMI and the DBE BW.

In Example 57, the subject matter of Example 50 can optionally include that the non-AP STA is capable to operate with 320 MHz; that the DBE Max BW is 320 MHz; and that the method further includes: if the current DBE BW is 160 MHz, operating the non-AP STA at an operating BW of 160 MHz; and if the current DBE BW of 160 MHz changing to 320 MHz, to operate the non-AP STA at an operating BW of 320 MHz.

In Example 58, the subject matter of Example 50 can optionally include that the non-AP STA is capable to operate with 320 MHz; and that the method further includes: if the non-AP STA changes its operating BW to 80 MHz and then to 160 MHz using OMI, and if the DBE BW switches to 320 MHz, set the non-AP STA operating BW so that it is set to the minimum between the non-AP STA maximum BW capability; the non-AP STA's OMI last BW indication, except when the last OMI BW indication, when it was sent, was set to the current DBE BSS BW, when it was sent; and the current DBE BW.

Example 59 ia an apparatus. The apparatus include means for: receiving a signal indicative of current network conditions; analyzing the received signal to determine available bandwidth; and allocating bandwidth to a plurality of wireless communication channels based on the determined available bandwidth.

In Example 60, the subject matter of Example 59 can optionally include that the apparatus further includes means for adjusting bandwidth allocation in real-time in response to changes in network conditions.

In Example 61, the subject matter of Example 59 can optionally include that the apparatus further includes means for storing historical bandwidth usage data and utilizing the historical bandwidth usage data to predict future bandwidth requirements.

While the invention has been particularly shown and described with reference to specific embodiments, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced.

## Claims

1. A device, the device comprising processing circuitry coupled to storage, the processing circuitry configured to:
receive a signal indicative of current network conditions;
analyze the received signal to determine available bandwidth; and
allocate bandwidth to a plurality of wireless communication channels based on the determined available bandwidth.

2. The device of claim 1,
wherein the processing circuitry is further configured to adjust bandwidth allocation in real-time in response to changes in network conditions.

3. The device of claim 1,
wherein the processing circuitry is further configured to store historical bandwidth usage data and utilize the historical bandwidth usage data to predict future bandwidth requirements.

4. The device of claim 1,
wherein the device is configured as an IEEE 802.11 non-AP STA.

5. The device of claim 4,
wherein the signal indicative of current network conditions comprises an Initial Control Frame, ICF, to indicate a Basic Service Set, BSS, bandwidth, BW,
wherein the processing circuitry is further configured to allocate bandwidth to a plurality of wireless communication channels based on the determined available bandwidth and the BSS BW.

6. The device of claim 5,
wherein the indicated BSS BW is 320 MHz;
wherein the non-AP STA is capable to operate with 320 MHz and is capable to modify its operating bandwidth, BW, to be 20 MHz, 40 MHz, 80 MHz, 160 MHz, or 320 MHz;
wherein the processing circuitry is further configured to enable DSO while a non-AP STA's current operating BW is 160 MHz and to modify the non-AP STA's operating BW with Operating Mode Indication, OMI, to become:
320 MHz, the processing circuitry is further configured to disable DSO automatically once the change of the non-AP STA's operating BW with OMI is finalized or to disable DSO automatically in accordance with the non-AP STA's specification;
80 MHz, the processing circuitry is further configured to
disable DSO automatically once the change of the non-AP STA's operating BW with OMI is finalized or to disable DSO automatically in accordance with the non-AP STA's specification; and
once DSO is disabled, if the non-AP STA wants to operate with DSO again, enable DSO with the Aceess Point again with indicating that the non-AP STA is an 80 MHz non-AP STA and therefore be allocated an 80 MHz DSO subband;
80 MHz, the processing circuitry is further configured to
remove the 160 MHz DSO subband that the non-AP STA operates on and replace it by a default 80 MHz subband that is advertised by the AP as AP's DSO parameters;
40 MHz, the processing circuitry is further configured to disable DSO;
20 MHz, the processing circuitry is further configured to disable DSO or to preserve DSO and change the DSO subband to the only DSO subband available for 20 MHz DSO operating non-AP STAs.

7. The device of claim 4,
wherein the processing circuitry is further configured to:
receive a Dynamic Bandwidth Extension, DBE, maximum bandwidth, Max BW, announced by an Access Point, AP; and
receive a current Dynamic Bandwidth Extension, DBE, bandwidth, BW, which is between a Basic Service Set, BSS, bandwidth, BW, and the DBE Max BW:
preferably wherein the DBE Max BW is 32 MHz.

8. The device of claim 7,
wherein the DBE Max BW is a value selected from a group of values consisting of: 80 MHz; 160 MHz; and 320 MHz.

9. The device of claim 7,
wherein the processing circuitry is further configured to, when the current DBE BW changes, change a non-AP STA's operating bandwidth to make sure that the non-AP STA's operating bandwidth is the maximum bandwidth that the non-AP STA is capable of and always lower or equal to the current DBE BSS BW.

10. The device of claim 4,
wherein the non-AP STA is configured to operate at an operating BW that is the minimum between the maximum operating BW of the non-AP STA that it advertises and the DBE BW;
preferably wherein the maximum operating BW of the non-AP STA is 320 MHz and the operating BW of the non-AP STA is equal to the DBE BW; or
preferably wherein the maximum operating BW of the non-AP STA is 160 MHz and the operating BW of the non-AP STA is equal to the DBE BW, except if the DBE BW is 320 MHz, in which case the operating BW of the non-AP STA is 160 MHz.

11. The device of claim 4,
wherein the processing circuitry is further configured to reduce the operating BW of the non-AP STA with Operating Mode Indication, OMI, and to operate the non-AP STA at an operating BW that is the maximum between the BW indicated in OMI and the DBE BW.

12. The device of claim 7,
wherein the non-AP STA is capable to operate with 320 MHz;
wherein the DBE Max BW is 320 MHz;
wherein the processing circuitry is further configured to
if the current DBE BW is 160 MHz, to operate the non-AP STA at an operating BW of 160 MHz; and
if the current DBE BW of 160 MHz changes to 320 MHz, to operate the non-AP STA at an operating BW of 320 MHz.

13. The device of claim 7,
wherein the non-AP STA is capable to operate with 320 MHz;
wherein the processing circuitry is further configured to
if the non-AP STA changes its operating BW to 80 MHz and then to 160 MHz using OMI, and
if the DBE BW switches to 320 MHz,
set the non-AP STA operating BW so that it is set to the minimum between
the non-AP STA maximum BW capability;
the non-AP STA's OMI last BW indication, except when the last OMI BW indication, when it was sent, was set to the current DBE BSS BW, when it was sent; and
the current DBE BW.

14. A non-transitory computer-readable medium storing computer-executable instructions which when executed by one or more processors result in performing operations comprising:
receiving a signal indicative of current network conditions;
analyzing the received signal to determine available bandwidth; and
allocating bandwidth to a plurality of wireless communication channels based on the determined available bandwidth.

15. A method, comprising:
receiving a signal indicative of current network conditions;
analyzing the received signal to determine available bandwidth; and
allocating bandwidth to a plurality of wireless communication channels based on the determined available bandwidth.
